Europäisches Patentamt

European Patent Office

Office européen des brevets

(19)

(11) Numéro de publication: **0 226 076
B1**

(12) **FASCICULE DE BREVET EUROPEEN**

(45) Date de publication du fascicule du brevet:
14.03.90

(51) Int. Cl.⁴: **B25J 15/02, C21C 5/44**

(21) Numéro de dépôt: 86116249.3

(22) Date de dépôt: 24.11.86

(54) Grappin automatique de manutention d'objets et robot pourvu d'un tel grappin.

(30) Priorité: 03.12.85 LU 86188

(43) Date de publication de la demande:
24.06.87 Bulletin 87/26

(45) Mention de la délivrance du brevet:
14.03.90 Bulletin 90/11

(84) Etats contractants désignés:
AT BE DE ES FR GB IT NL SE

(56) Documents cités:
EP-A- 0 001 686
DE-A- 3 312 483
FR-A- 2 070 868
GB-A- 2 129 086
US-A- 2 370 528
US-A- 3 586 176

IBM TECHNICAL DISCLOSURE BULLETIN,
vol. 28, no. 7, décembre 1985, pages 2992-2997, New
York, US; "End effector with diagonal and rotational
compliance mechanism"
IBM TECHNICAL DISCLOSURE BULLETIN,
vol. 27, no. 7B, décembre 1984, pages 4294-4295, New
York, US; R.L. KAFTAN et al.: "Gripper with integral
parts transfer"
(73) Titulaire: PAUL WURTH S.A., 32 rue d'Alsace,
L-1122 Luxembourg(LU)

(72) Inventeur: Leglile, Edouard, 165 rue de Trèves, L
Luxembourg(LU)
Inventeur: Lonardi, Emile, 30 rue de Schouweller, L
Baschorage(LU)
Inventeur: Kremer, Victor, 95 rue de l'Egalit, L
Luxembourg(LU)

(74) Mandataire: Meyers, Ernest et al, Office de Brevets
FREYLINGER & ASSOCIES B.P. 1 321, route d'Arlon,
L-8001 Strassen(LU)

## Description

La présente invention concerne un grappin automatique de manutention d'objets, monté à l'extrémité d'un bras de commande et comprenant un plateau pourvu d'une paire de griffes montées, face à face, sur le plateau, l'une de façon coulissante, l'autre de façon pivotante. L'invention concerne également un robot pourvu d'un tel grappin.

Quoique n'y étant pas limitée, la présente invention concerne plus particulièrement un grappin pour la manutention de briques réfractaires pour la réalisation d'un revêtement réfractaire intérieur d'une enceinte métallurgique, tel qu'un convertisseur et l'invention sera décrite plus en détail en référence à cette application avantageuse.

On sait que le garnissage réfractaire d'un convertisseur doit être refait très souvent, c.à.d. au moins une fois toutes les trois semaines. Jusqu'à présent, ce travail très pénible et fatiguant est toujours effectué, de façon manuelle malgré plusieurs projets d'automatisation.

La mise en oeuvre de robots pour effectuer ce travail ne peut être pris en considération que lorsqu'elle permet d'éliminer pratiquement toute intervention manuelle et lorsque la cadence de travail est au moins aussi rapide que la pose manuelle.

Or, non seulement les mouvements nécessaires pour aller chercher les briques sur les pallettes et les poser à l'endroit voulu sont déjà compliqués en soi, mais, en plus, on dispose généralement de deux types différents de briques, ce qui complique encore davantage l'automatisation.

Il faut en effet rappeler que pour pouvoir effectuer un dépôt circulaire de briques, celles-ci doivent avoir une forme trapézoïdale, c.à.d. que les prolongements de leurs côtés longitudinaux convergent vers l'axe central du convertisseur. Etant donné par ailleurs, qu'il n'est pas possible de fabriquer des briques sur mesure, on dispose, en général de deux ou plusieurs types standard de briques, de conicité différente et chaque fois que le maçonnage s'écarte trop de la forme de la paroi du convertisseur, on change de type de briques. A cause de toutes ces complications, la robotisation de ces manoeuvres n'était pas encore possible jusqu'à présent.

Le document IBM TECHNICAL DISCLOSURE BULLETIN vol. 28 No 7, décembre 1985, pages 2992-2997, New York, US: "End effector with diagonal and rotational compliance mecanism " décrit une sorte de grappin de manutention avec des ventouses de fixation d'un objet et qui est mobile autour de deux axes de pivotement parallèles sous le contrôle d'un palpeur.

Le but de la présente invention est de combler cette lacune en prévoyant un grappin automatique de manutention d'objets ainsi qu'un robot pourvu d'un tel grappin en vue de l'application à la pose automatique d'un briquetage réfractaire sur la paroi intérieure d'une enceinte métallurgique.

Pour atteindre cet objectif, la grappin proposé par la présente invention est essentiellement caractérisé en ce que le plateau est en outre déplaçable parallèlement auxdits axes de pivotement et mobile autour d'un troisième axe de pivotement orthogonal auxdits premier et second axes de pivotement, et comporte des moyens pour faire pivoter le plateau indépendamment autour de chacun des trois axes de pivotement ainsi que des palpeurs pour mesurer l'angle de pivotement du plateau autour de chacun des trois axes de pivotement par rapport à une position de référence.

Chaque griffe est pourvue d'au moins un palpeur de contact pour contrôler la saisie correcte d'un objet.

Le plateau comporte sur au moins un des côtés longitudinaux au moins un segment rabattable, déplaçable longitudinalement avec la griffe coulissante et pourvu également d'au moins un palpeur.

Le plateau est en outre pourvu d'un télémètre à rayonnement ou à action mécanique.

La griffe pivotante est, de préférence, montée sur deux leviers pivotants pour réduire les faces nécessaires au mouvement de cette griffe.

En vue de l'application à la réfection des convertisseurs, le grappin est avantageusement conçu pour pouvoir saisir et poser, en même temps, deux briques superposées, ce qui augmente, bien entendu, sa cadence de travail.

D'autres particularités et caractéristiques ressortiront de la description détaillée d'un mode de réalisation avantageux, présenté ci-dessous, à titre d'exemples, en référence aux figures annexées dans lesquelles:

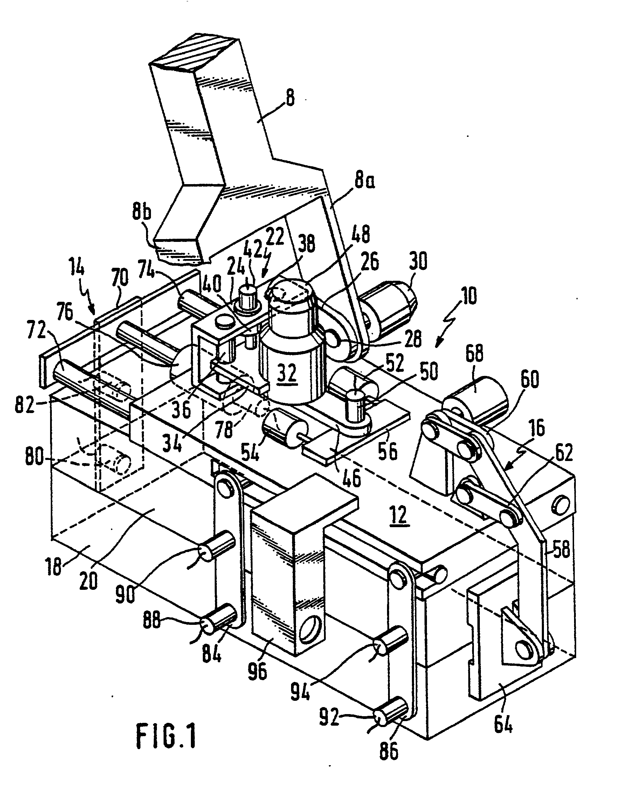

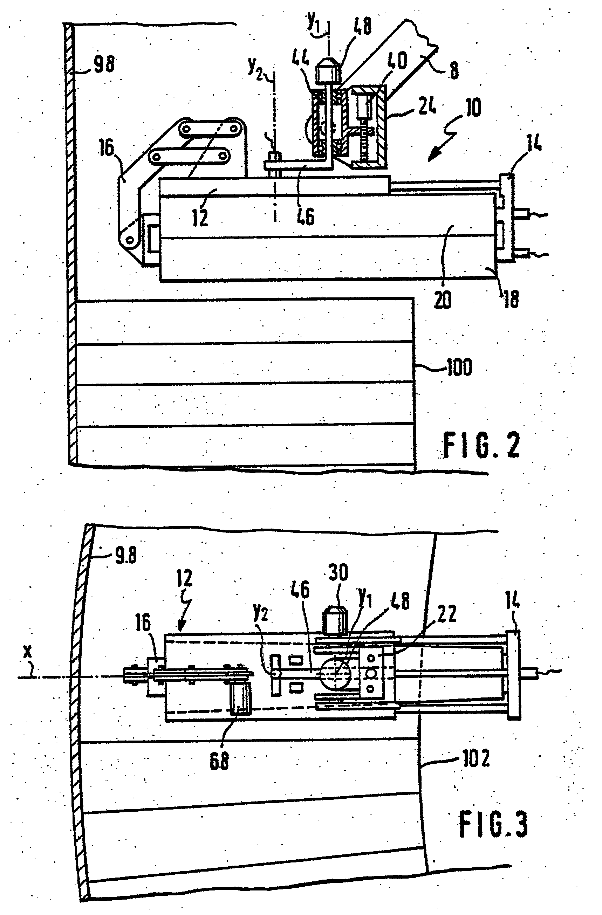

La figure 1 montre une vue en perspective d'un grappin automatique selon la présente invention, et les figures 2 à 5 montrent schématiquement des vues latérales et des vues en plan du grappin pendant différentes phases de l'opération de pose d'une paire de briques superposées.

La figure 1 montre un grappin 10 selon la présente invention monté à l'extrémité d'un bras 8 d'un robot ou d'un autre engin de manutention. Le grappin 10 comporte un plateau 12 qui, dans le mode de réalisation représenté, possède une forme rectangulaire, et qui est pourvu, sur les deux petits côtés opposés, de deux griffes 14, 16 pour tenir un objet, en l'occurrence deux briques superposées, 18, 20. L'extrémité du bras 8 est conçue, par exemple, sous forme de fourche à deux branches 8a, 8b, la branche 8b n'étant représentée que partiellement pour ne pas cacher d'autres éléments. Le grappin 10 est monté entre ces deux branches 8a, 8b à l'aide d'un berceau 22 constitué d'un profilé 24 ayant une section en forme de "U" avec deux flancs latéraux, dont seul le flanc 26 est visible, l'autre flanc, opposé au flanc 26 étant identique à celui-ci n'a pas été représenté pour ne pas surcharger les dessins. Les flancs 26 sont montés, de façon pivotante entre les branches 8a et 8b par l'intermédiaire de pivots 28. L'un de ces pivots 28 fait partie de l'axe d'un moteur, par exemple un moteur électrique 30 pas à pas afin de pouvoir faire tourner le berceau 22 autour de l'axe de ce pivot de suspension 28. Le moteur 30 comporte un palpeur pour mesurer la position angulaire du berceau 22 et du plateau 10 par rapport à un axe ou un plan de référence, par exemple, l'axe longitudinal du bras 8.

Entre les deux flancs 26 du berceau 22 se trouve un carter 32 pourvu d'une bride 34 maintenue par deux tiges 36, 38 entre les deux branches du profilé 24 du berceau 22. Un moteur 40, par exemple électrique ou un vérin permet le déplacement de la bride 34 et du carter 32 le long des tiges 36, 38 à l'intérieur du profilé 24 du berceau 22. Ce déplacement du boîtier 32 perpendiculairement à l'axe de pivotement 28 est contrôlé par un palpeur 42.

Le montage est, de préférence, tel que l'axe central du boîtier cylindrique 32 soit perpendiculaire à l'axe de pivotement 28.

A l'intérieur du carter 32 se trouvent des roulements 44 aménagés autour d'un arbre traversant coaxialement ce carter 32 et constituant la branche verticale d'une bielle 46 en forme de "L". Cette bielle 46 peut être tournée autour de l'axe vertical $Y_1$ du carter 32 par l'intermédiaire d'un moteur 48 (voir également figure 2) monté sur le carter 32 et associé à un palpeur non représenté pour mesurer et contrôler la rotation de la bielle 46 autour de l'axe du carter 32.

Le plateau 12 est monté, de façon pivotante, à l'extrémité de la branche horizontale de la bielle 46 de façon à pouvoir tourner par rapport à la bielle 46 autour d'un axe $Y_2$ parallèle à l'axe de rotation de la bielle 46 dans le carter 32. Ce pivotement du plateau 12 par rapport à la bielle 46 est mesuré et contrôlé par un palpeur 50. Cette possibilité de pivotement peut toutefois être entravée par deux petits vérins 52, 54 solidaires de la bielle 46, dont les tiges, lorsqu'elles sont sorties, prennent appui sur une traverse 56 solidaire du plateau 12.

Le plateau 12 possède ainsi, lorsque les tiges des vérins 52 et 54 sont rentrées, quatre degrés de liberté par rapport au bras 8, à savoir deux axes $Y_1, Y_2$ de pivotement parallèles perpendiculaires à la surface du plateau, un axe de pivotement horizontal et constitué par la suspension 28 dans les branches 8a et 8b ainsi que la possibilité de déplacement perpendiculairement par rapport à sa surface principale sous l'action du vérin 40.

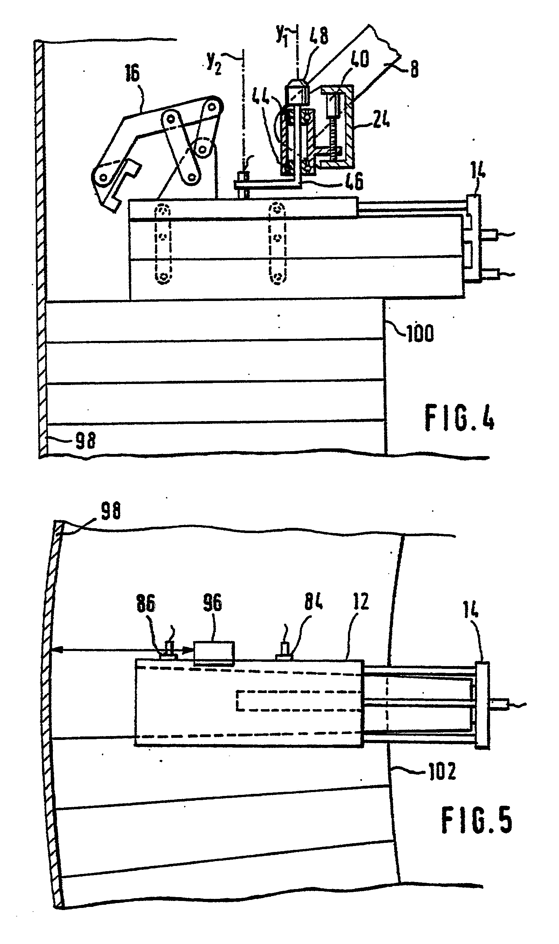

La griffe pivotante 16, comporte un bras principal 58 monté par l'intermédiaire de deux leviers pivotants 60, 62 sur le plateau 12. L'extrémité du bras 58 porte un mâchoire pivotante 64 permettant de saisir deux briques superposées. Cette mâchoire comporte, du côté intérieur, des palpeurs de contact non représentés. La griffe 16 est actionnée au moyen d'un moteur 68, par exemple électrique agissant sur l'un des leviers, en l'occurrence le levier 60 pour déplacer la mâchoire entre une position fermée et une position ouverte (voir figure 4). La présence des deux leviers pivotants 60, 62 permet de superposer au mouvement de rotation un mouvement de translation afin de réduire l'espace nécessaire à l'ouverture de la griffe 16 et de pouvoir avancer ainsi les briques 18 et 20 le plus près possible d'une paroi comme représenté sur la figure 4.

La seconde griffe 14, qui est une griffe coulissante, est essentiellement constituée par une mâchoire plate 70 fixée sur des tiges 72, 74 pouvant coulisser longitudinalement dans le plateau 12 sous l'action d'un moteur ou d'un vérin 76. L'action de ce moteur ou vérin 76 est également sous contrôle d'un palpeur de position 78. De même, la mâchoire 70 est pourvue de deux palpeurs de contact 80 et 82, contrôlent la fermeture correcte de la griffe coulissante 14.

Il est à noter que les deux griffes 14 et 16 peuvent être remplacées facilement et rapidement par des griffes correspondantes qui ne sont conçues que pour la prise d'une seule brique, en cas de besoin.

Le plateau 12 comporte, en outre, au moins sur l'un des côtés longitudinaux, au moins un , de préférence deux segments de positionnement 84, 86. Ces segments 84, 86 sont montés sur les tiges 72 et/ou 74 de support de la griffe coulissante 14 et sont déplaçables longitudinalement avec celle-ci. Les segments 84 et 86 sont, en outre, montés de façon pivotante sur ces tiges pour pouvoir être déplacés, sous l'action de moyens automatiques non montrés entre la position représentée à la figure 1 et une position horizontale le long du flanc du plateau 12. Les segments 84, 86 sont, comme toutes les parties en mouvement du grappin 10, pourvus de palpeurs 88, 90, 92, 94 pour contrôler le positionnement correct du plateau par rapport aux briques 18, 20 et vice-versa.

Le grappin 10 est également pourvu d'un télémètre 96 à rayonnement, connu en soi, pour mesurer la distance séparant le grappin d'une paroi, par exemple, de la paroi du convertisseur. Ce télémètre 96 fonctionne avec un faisceau divergeant par opposition à une source ponctuelle qui, en visant un point d'une surface peut occasionner des erreurs si cette surface n'est pas bien lisse. Cette distance peut également être mesurée à l'aide d'un palpeur mécanique de contact.

Tous les palpeurs et détecteurs dont est muni le grappin 10 sont reliés, par des moyens non montrés, à une unité centrale de traitement des informations, en fonction desquelles sont commandés automatiquement les mouvements à effectuer par le grappin et le robot. Ces mouvements seront maintenant décrits ci-dessous en référence aux figures 2 à 5.

Le robot amène les briques automatiquement dans la position de la figure 2 depuis des palettes se trouvant sur une plate-forme d'un poste opératif dans le convertisseur, non montré sur la figure. A cet effet, le robot est programmé par ordinateur, en fonction de l'emplacement des palettes et de la disposition des briques sur celles-ci afin d'aller les chercher automatiquement et selon un programme de dépalettisation prédéterminé. Le robot est également programmé pour choisir automatiquement entre les deux palettes, pour prendre le type de briques qui convient, ceci en fonction des mesures effectuées lors des poses précédentes.

Il peut arriver que des briques soient collées ensemble sur les palettes. Pour éviter de ramasser plus de deux briques à la fois et d'éviter la chute d'une brique lors du transport, les briques sont décollées lors de la prise sur les palettes. A cet effet, le grappin 10 est positionné de façon à saisir une paire de briques superposées, la griffe 16 étant en position fermée, tandis que la griffe 14 est suffisamment sortie pour que le plateau 12 du grappin 10 puisse être descendu sur la brique supérieure. Lorsque le grappin se trouve, ainsi en place, la griffe coulissante 14 est rentrée jusqu'à ce que ses palpeurs 80 et 82 détectent le contact avec chacune des briques. La griffe 14 est ensuite rentrée davantage, le grappin 10 restant immobile. Par ce mouvement, les deux briques sont déplacées en direction de la mâchoire 64 de la griffe 16 et sont décollées de la brique en-dessous si elles étaient collées à celle-ci auparavant. La griffe coulissante 14 est arrêtée automatiquement lorsque chacun des deux palpeurs prévus dans la mâchoire 64 de la griffe 16 signale le contact avec chacune des briques. Une autre possibilité de détacher les briques est d'augmenter la masse de la griffe 14, afin de produire, lors de sa fermeture, un effet de choc qui détache la ou les deux briques supérieures par suite de l'inertie de la brique inférieure. Encore une autre possibilité, pouvant éventuellement être combinée avec l'une de celles mentionnées ci-dessus, est de munir la griffe 14 d'un vibreur.

Lorsque les deux briques sont saisies correctement dans le grappin 10, le robot les amène dans la position de la figure 2 sur laquelle on voit une partie de la paroi 98 d'un convertisseur à l'intérieur duquel un revêtement réfractaire 100 de briques superposées est en voie d'être posé.

Selon l'une des particularités de l'invention, on a séparé les fonctions de dépalettisation et de transport des briques, d'une part, et la mise en place des briques, d'autre part. Autrement dit, le bras 12 du robot amène les briques automatiquement jusqu'à un point de référence bien déterminé à partir duquel la mise en place est prise en charge par le grappin 10 qui effectue la plupart des mouvements par rapport à ce point de référence. Ce point de référence peut par exemple être le point O représenté sur la figure 2 et qui constitue l'intersection entre l'axe de suspension horizontale entre les branches 8a et 8b du bras 8 et l'axe de pivotement vertical de la bielle 46 dans le carter 32. Ce point de référence O se trouvera à des distances prédéterminées de la paroi 98, de la surface supérieure du revêtement 100 déjà posé, ainsi que de la brique ou de la paire de briques voisines 102 déposées précédemment. La distance par rapport à la paroi 98 sera déterminée de manière à pouvoir ouvrir la griffe pivotante 16. La distance verticale par rapport à la surface supérieure du revêtement 100 sera déterminée de manière que la hauteur séparant cette surface de la brique inférieure 18 soit inférieure à l'épaisseur d'une brique pour éviter que la brique supérieure 20 ne s'accroche sur la brique voisine 102 lors de la descente et lorsque la brique supérieure 20 n'est pas parfaitement positionnée sur la brique inférieure 18.

Le point de référence O déterminé ainsi, de façon théorique dans l'espace est recalculé après chaque pose d'un couple de briques, notamment en fonction des mesures fournies par les palpeurs de positionnement et du type de briques posées. Le programme de commande du robot tient compte de ces corrections pour amener chaque fois le grappin 10 dans la position de référence ainsi calculée.

Les figures 2 et 3 montrent le grappin 10 avec une paire de briques 18, 20 occupant la position de référence, respectivement vue en élévation et en plan. Dans cette poisition, l'axe longitudinal médian représenté par X sur la figure 3 passe approximativement par l'axe central vertical non visible du convertisseur. La première phase consiste à actionner le moteur 48 pour faire tourner la bielle 46 dans le sens contraire des aiguilles d'une montre vu sur la figure 3. Le plateau 12 étant bloqué par les vérins 52 et 54 par rapport à la bielle 46, celle-ci fait tourner le plateau 12 avec les briques autour de l'axe vertical $Y_1$ jusqu'à ce que le coin extérieur des briques vienne au contact de la brique voisine 102. L'amplitude de ce pivotement jusqu'au contact avec la brique voisine 102 est mesuré par le palpeur associé au moteur 48. La résistance à la poursuite du pivotement est détectée automatiquement par le moteur 48 et commande le retrait des tiges des vérins 52 et 54 pour libérer l'axe de pivotement entre le plateau 12 et la bielle 46 représentée par $Y_2$ sur les figures 2 et 3. La poursuite du pivotement de la bielle 46 sous l'action du moteur 48 engendre, par conséquent, une rotation du plateau et des briques dans le sens des aiguilles d'une montre autour de l'axe vertical $Y_2$ jusqu'à ce que les deux briques 18 et 20 touchent sur toute la longueur la brique voisine 102. L'amplitude de pivotement de cette deuxième phase autour de $Y_2$ détecté par le palpeur 50 doit théoriquement correspondre approximativement à l'amplitude du pivotement de la première phase autour de l'axe $Y_1$. Si les amplitudes de ces pivotements successifs autour des axes $Y_1$ et $Y_2$ ne sont plux égaux ou dépassent une tolérance prédéterminée, cela signifie que la brique 102 n'est plus correctement orientée sur l'axe central du convertisseur et que la direction de courbure prise par les briques s'écarte de la courbure de la paroi 98 du convertisseur. Cette information est utilisée pour ordonner automatiquement au robot de changer de type de briques afin de redresser la courbure de la pose.

Au lieu d'opérer le pivotement de façon contrôlée autour des deux axes $Y_1$ et $Y_2$ en débloquant les vérins 52 et 54 seulement après la première phase de pivotement autour de l'axe $Y_1$, il est possible de débloquer le plateau 12 par la rentrée des vérins dès que le grappin se trouve dans la position de référence. Dans ce cas les phases de rotation autour des axes $Y_1$ et $Y_2$ peuvent se produire simultanément ou dans l'ordre inverse, mais le résultat final tel que décrit ci-dessus sera le même, c'est-à-dire que la comparaison des amplitudes de pivotement autour des deux axes $Y_1$ et $Y_2$ fournit une indication quant au positionnement correct des briques.

Après avoir été ainsi déplacé latéralement contre la brique 102, le grappin 10 est descendu sur la surface du revêtement 100 sous l'action du moteur 40. Dès que les briques ont pris appui sur le revêtement 100, ce qui est détecté automatiquement par le moteur 40, la griffe pivotante 16 est ouverte sous l'action du moteur 68 comme représenté à la figure 4. A ce stade, il est prévu de descendre les segments 84, 86 qui, jusqu'à présent, se trouvaient en position relevée le long du plateau 12. Toutefois, il n'est pas certain que ces segments puissent être rabattus vers la position représentée sur la figure 1 car il est possible que, lors de la prise des briques 18 et 20 sur la palette, celles-ci étaient saisies de manière que le bord supérieur de la brique 20 dépasse le bord longitudinal du plateau 12 du côté des segments 84 et 86. Pour remédier à cette éventualité, le plateau, libéré des briques par l'ouverture des griffes , est d'abord pivoté légèrement dans le sens des aiguilles d'une montre sur les figures 3 et 5 par une rotation de la bielle dans le sens inverse de sa rotation précédente. Après le rabattement des segments 84 et 86 dans la position représentée sur la figure 1, le plateau 12 est à nouveau pivoté, sous l'action du moteur 48 et de la bielle 46 dans le sens contraire des aiguilles d'une montre sur la figure 5 jusqu'à ce que les segments 84 et 86 soient en contact avec les côtés latéraux des briques 18 et 20, ce qui est détecté par les palpeurs 88, 90, 92 et 94.

A partir de ce moment, le moteur 76 est actionné pour rentrer la griffe coulissante 14 dans le plateau 12 et pousser les deux briques 18 et 20 contre la paroi 98. Les deux segments 84 et 86 qui avancent avec la griffe coulissante 14 doivent guider les deux briques et les maintenir lors de ce glissement au contact préalablement établi avec la brique voisine 102. Les deux briques sont avancées de cette manière jusqu'à ce qu'elles occupent la position définitive soit contre la paroi 98, soit à une certaine distance de celle-ci.

Etant donné que le point de référence initial O a été déterminé en fonction de la position définitive de la paire de briques, l'amplitude du mouvement de la pince coulissante 14 devrait, en théorie, être toujours la même, le trajet parcouru étant contrôlé par le palpeur 78 qui commande automatiquement l'arrêt du moteur 76 en fonction du programme initial. Toutefois, pour surveiller le positionnement définitif des briques, le télémètre 97 mesure, lors de la poussée des briques vers la paroi la distance séparant les briques de la paroi et contrôle ainsi le rapprochement de celle-ci. Le télémètre 96 peut ainsi commander l'arrêt prématuré du moteur 76 si les briques étaient en position définitive avant la position fixée par le programme. De même, si à l'arrêt programmé de la pince 14 les briques étaient encore trop loin de la paroi 98, le télémètre 96 peut commander la poursuite du mouvement de la pince 14 et transmettre des informations correspondantes à la centrale pour modifier le calcul du point de référence en conséquence pour la prochaine pose.

Dès que les deux briques 18 et 20 occupent leur position définitive, le robot retourne vers les palettes pour prendre une nouvelle paire de briques. Pendant ce mouvement, la griffe 16 est fermée tandis que la griffe 14 est ouverte par dégagement du plateau 12.

Il peut être avantageux de combiner le grappin avec un dispositif de nettoyage , par exemple à aspiration ou à soufflerie avec ou sans brosses et qui est actionné dès que le grappin a atteint son point de référence ou déjà lors de l'approche.

**Revendications**

1. Grappin automatique de manutention d'objets, monté à l'extrémité d'un bras de commande et comprenant un plateau pourvu d'une paire de griffes montées, , face à face, sur le plateau, l'une de façon coulissante, l'autre de façon pivotante, le plateau (12) étant fixé au bras (8) moyennant un premier et un second axe de pivotement (Y$_1$, Y$_2$) parallèles entre eux et perpendiculaires à la surface du plateau (12), caractérisé en ce que le plateau est en outre déplaçable parallèlement auxdits axes de pivotement (Y$_1$, Y$_2$) et mobile autour d'un troisième axe de pivotement orthogonal auxdits premier et second axe de pivotement, et comporte des moyens pour faire pivoter le plateau indépendamment autour de chacun des trois axes de pivotement ainsi que des palpeurs pour mesurer l'angle de pivotement du plateau autour de chacun des trois axes de pivotement par rapport à une position de référence.

2. Grappin selon la revendication 1, caractérisé en ce que chaque griffe (14, 16) est pourvue d'au moins un palpeur de contact pour contrôler la saisie correcte d'un objet.

3. Grappin selon la revendication 1, caractérisé en ce que le plateau (12) comporte , sur au moins un des côtés longitudinaux, au moins un segment rabattable (84, 86), déplaçable longitudinalement avec la griffe coulissante 14 et pourvu également d'au moins un palpeur.

4. Grappin selon l'une quelconque des revendications 1 à 3, caractérisé en ce que le plateau (12) est pourvu d'un télémètre à rayonnement (96) ou à action mécanique.

5. Grappin selon la revendication 1, caractérisé en ce que la griffe pivotante (16) est montée sur deux leviers pivotants (60, 62).

6. Grappin selon la revendication 1, caractérisé en ce que les griffes (14, 16) sont conçues pour saisir une seule brique.

7. Grappin selon la revendication 1 , caractérisé en ce que les griffes (14, 16) sont conçues pour saisir deux briques.

8. Robot pourvu d'un grappin automatique selon l'une quelconque des revendications 1 à 7.

9. Robot selon la revendication 8, caractérisé en ce que le robot ne sert qu'au transport d'objets et en ce que le grappin ne sert qu'à leur mise en place.

10. Application d'un robot selon les revendications 8 ou 9 au maçonnage intérieur d'une enceinte.

11. Application selon la revendication 10, caractérisée en ce que ladite enceinte est un convertisseur métallurgique.

**Patentansprüche**

1. Automatischer Greifer zum Handhaben von Gegenständen, der an dem Ende eines Steuerarms (8) befestigt ist und eine Platte (12) aufweist, die mit zwei Klauen versehen ist, und zwar einer verschiebbaren Klaue, und einer schwenkbaren Klaue, die einander gegenüber auf der besagten Platte angebracht sind, wobei diese Platte (12) über eine erste und eine zweite Schwenkachse (Y$_1$, Y$_2$), die parallel zueinander und senkrecht zu der Oberfläche der besagten Platte sind, an dem Arm (8) befestigt ist, dadurch gekennzeichnet, daß die besagte Platte außerdem parallel zu den besagten Schwenkachsen (Y₁, Y₂) verschiebbar ist, und um eine dritte Achse schwenkbar ist, die orthogonal zu der besagten ersten und zweiten Schwenkachse ist, und daß sie versehen ist mit Mitteln, um sie in unabhängiger Weise um jede der drei Achsen zu schwenken, sowie mit Fühlern, um den Winkel der Schwenkung der Platte um jede der drei Schwenkachsen bezüglich einer Bezugsposition zu messen.

2. Automatischer Greifer gemäß Anspruch 1, dadurch gekennzeichnet, daß jede Klaue (14, 16) mit mindestens einem Kontaktfühler versehen ist, um das richtige Ergreifen eines Gegenstandes zu kontrollieren.

3. Automatischer Greifer gemäß Anspruch 1, dadurch gekennzeichnet, daß die Platte (12) auf mindestens einer der Längsseiten mindestens einen herabschwenkbaren Stab (84, 86) aufweist, der zusammen mit der Gleitklaue 14 in Längsrichtung verschoben werden kann und ebenfalls mit mindestens einem Fühler versehen ist.

4. Automatischer Greifer gemäß irgendeinem der Ansprüche 1 bis 3, dadurch gekennzeichnet, daß die Platte (12) mit einem Strahlungs-Entfernungsmesser oder mechanischen Entfernungsmesser (96) versehen ist.

5. Automatischer Greifer gemäß Anspruch 1, dadurch gekennzeichnet, daß die Schwenkklaue (16) auf zwei Schwenkhebeln (60, 62) angebracht ist.

6. Automatischer Greifer gemäß Anspruch 1, dadurch gekennzeichnet, daß die Klauen (14, 16) so konzipiert sind, daß sie einen einzigen Ziegelstein ergreifen können.

7. Automatischer Greifer gemäß Anspruch 1, dadurch gekennzeichnet, daß die Klauen (14, 16) so konzipiert sind, daß sie zwei Ziegelsteine ergreifen können.

8. Roboter, der mit einem automatischen Greifer gemäß irgendeinem der Ansprüche 1 bis 7 versehen ist.

9. Roboter gemäß Anspruch 8, dadurch gekennzeichnet, daß der Roboter nur zur Beförderung von Gegenständen dient, und daß der Greifer nur zu ihrer Verlegung dient.

10. Verwendung eines gemäß Anspruch 8 oder 9 gekennzeichneten Roboters zum Ausmauern einer Umhüllung.

11. Verwendung gemäß Anspruch 10, dadurch gekennzeichnet, daß die besagte Umhüllung ein metallurgischer Konverter ist.

## Claims

1. Automatic grab for handling articles, mounted on the end of a control arm and comprising a plate equipped with a pair of claws mounted facing one another on the plate, one slidably and the other pivotably, wherein the plate (8) is connected to the arm (8) by a first and a second pivot axis (Y₁, Y₂) parallel to one another and perpendicular to the surface of the plate (12) characterized in that the plate can moreover be shifted parallel to said pivot axes (Y₁, Y₂) and moved about a third pivot axis at right-angles to said first and second pivot axes and comprises means of pivoting the plate independently about each of the three axes and sensors for measuring the pivoting angle of the plate about each of the three pivot axes in relation to a reference position.

2. Grab according to claim 1, characterized in that each claw (14, 16) is equipped with at least one contact sensor for checking that an article has been grasped correctly.

3. Grab according to claim 1, characterized in that least one of the longitudinal sides, at least one folddown segment (84, 86) displaceable longitudinally together with the sliding claw (14) and likewise equipped with at least one sensor.

4. Grab according to any one of claims 1 to 3 characterized in that the plate (12) is provided with a radiation-type or mechanically acting rangefinder (96).

5. Grab according to claim 1, characterized in that the pivoting claw (16) is mounted on two pivoting levers (60, 62).

6. Grab according to claim 1, characterized in that the claws (14, 16) are designed to grasp a single brick.

7. Grab according to claim 1, characterized in that the claws (14, 16) are designed to grasp two bricks.

8. Robot equipped with an automatic grab according to any one of Claims 1 to 7.

9. Robot according to claim 8 , characterized in that the robot serves only for transporting articles, and in that the grab serves only for putting them in place.

10. Application of a robot according to claims 8 or 9 for lining the inside of a vessel with bricks.

11. Application according to claim 10, characterized in that the said vessel is a metallurgical convertor.

FIG.1

FIG. 2

FIG. 3

FIG.4

FIG.5